# EUROPEAN PATENT APPLICATION

(11) **EP 2 533 486 A1**
(43) Date of publication of application: **12.12.2012**
(21) Application number: 11305723.6
(22) Date of filing: 09.06.2011
(51) Int. Cl.: H04L 29/06, G06Q 20/00, H04W 12/06, H04L 9/32, H04W 88/02, H04W 4/14

(54) **Method to validate a transaction between a user and a service provider**

(71) Applicant: Gemalto SA, 92190 Meudon (FR)
(72) Inventor: Campos, Jorge Marcelo, 92190 Meudon (FR)

(57) **Abstract**

This invention describes a method to validate a transaction between a mobile terminal of the user and a requesting service provider via an authentication server. For that, a SMS authentication session is established between the authentication application of the mobile terminal's smart card of the user and a trusted third party in the network side when transaction exchange occurs between the user and the service provider. The authentication method of the invention, processed through SMS technology, guarantees the security of communication between the mobile terminal and the third party without requiring extra hardware or special client software to be installed on the user mobile terminal nor increasing the existing communication protocols, signaling resources and operation costs. Moreover, with the authentication method of the invention it is not just the identity of the user to guarantee but also that the user is really willing to make the transaction and that no one tricked the user by showing other information.

## Description

### Field of the Invention

The present invention relates generally to mobile electronic transactions, and more specifically to validate said transaction by authenticating the identity of payer during mobile transactions.

### Description of the Prior Art

Cashless sales transactions, such as those occurring online, through mobile devices, through the mail, or over the telephone, involve payments that are not guaranteed to the merchant. Online transactions include those that are conducted, for example, over the Internet. No guarantee is provided primarily because the payers are not authenticated in such non face-to-face transactions, thereby allowing many risks to accompany the "card not present" transactions.

Such risks involve issues such as fraud for both merchants and cardholders, and an increased perception that buying goods and services online or through mobile devices is not safe and secure, which may keep some consumers from buying online. Other examples of risks include the unauthorized use of stolen account information to purchase goods and services online, fabrication of card account numbers to make fraudulent online purchases, and extraction of clear text account information from network traffic.

Given the continued expected high growth of electronic commerce, it is important to provide methods to authenticate payers. This will benefit all payment system participants including cardholders, merchants, and financial institutions. Authenticating the payer during online payment transactions will reduce the levels of fraud, disputes, retrievals and charge-backs, which subsequently will reduce the costs associated with each of these events.

Prior systems used to authenticate consumers during online transactions have not been widely adopted because these systems, like wPKI, were difficult to use, had complex designs, required significant up-front investment by system participants and lacked interoperability. Certain prior systems additionally required the creation, distribution and use of certificates by merchants, cardholders, issuers and acquirers. Such use of certificates is known to be quite burdensome.

Other prior systems allow a trusted party to verify the payer's identity using an authentication like one time passwords (OTP) technique. The OTP is packed in one or more text messages, like SMS, unstructured supplementary service data (USSD) or e-mail short messages, and are transmitted to the mobile terminal of the payer. However, data transmitted under form of such text messages may be decoded by third parties with a suitable digital receiver. Moreover, the messages are usually stored in the mobile terminal's memory. Thus any third party gaining access to the terminal may read the messages.

Additionally, the user of a mobile terminal cannot necessarily be identified in many cases. Especially by transmitting a SMS message the delivery known mechanisms, the identity of the sender of the message may be concealed to the receiving user, or the recipient of the message may not be that intended by the sender.

In view of the foregoing, a system for authenticating the identity of the user in an online or mobile transaction would be desirable. Such a validating transaction system should be relatively easy to implement and use, require a minimal investment of resources, and provide a high level of interoperability between the system's participants.

### Brief summary of the invention

The following presents a simplified summary in order to provide a basic understanding of some aspects of the disclosed embodiments. Its purpose is to present some concepts in a simplified form as a prelude to the more detailed description that is presented later.

In accordance with one or more embodiments and corresponding disclosure thereof, various aspects of the present invention provide an authentication method so as to make it possible to establish an encrypted SMS authentication session between an authentication application of the mobile terminal's smart card of the user and a trusted third party in the network side when transaction exchange occurs between the user and a service provider. The authentication method of the invention, processed through SMS technology, guarantees the security of communication between the mobile terminal and the third party without requiring extra hardware or special client software to be installed on the user mobile terminal nor increasing the existing communication protocols, signaling resources and operation costs.

With the authentication method of the invention it is not just the identity of the user to guarantee but also that the user is really willing to make the transaction and that no one can trick the user by showing other information.

In a preferred embodiment, an object of the invention is a method to validate a transaction between a mobile terminal of the user and a requesting service provider via an authentication server, said method comprising:
- establishing a SMS channel between the mobile terminal and the authentication server, said mobile terminal comprising a smart card wherein is stored a cryptographic key shared with the authentication server,
- transmitting to the smart card an authentication request from the authentication server, this authentication request comprising a confirmation message of the transaction and a request for entering user authentication information,
- performing an authentication application supported by the smart card to challenge the user for a validation of the message confirmation and an authentication information entered by the user, said authentication information being encrypted by the key,
- transmitting the encrypted authentication information from the mobile terminal through the SMS channel to the authentication server, in response to the authentication request,
- validating the transaction if the authentication information matches identifications information stored in users identifications information database.

To the accomplishment of the foregoing and related ends, one or more embodiments comprise the features hereinafter fully described and particularly pointed out in the claims.

### Brief description of the drawings

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
FIG.1, FIG.2 and FIG.3 schematically illustrate embodiments of a system architecture that supports the transaction validation method of the present invention.
FIG.4 illustrates the process through which a transaction between a user and a service provider is validated according to one embodiment of the present invention.

### Detailed description of the invention

The present invention will now be described in detail with reference to a few preferred embodiments as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known operations have not been described in detail so not to unnecessarily obscure the present invention.

The invention will now be described with reference to the figures. In the drawings, like or similar elements are designated with identical reference numerals throughout the several views. The depicted lines between the elements represent connections between these elements. The arrows represent connections wherein a direction of a message from one element to another element is shown. The term connection can refer to a functional connection and not necessary to a physical connection.

It may be recalled that, in the description, when an action is attributed to a microprocessor, an application or to a device comprising a microprocessor, this action is performed by the microprocessor controlled by instruction codes recorded in a memory of this device.

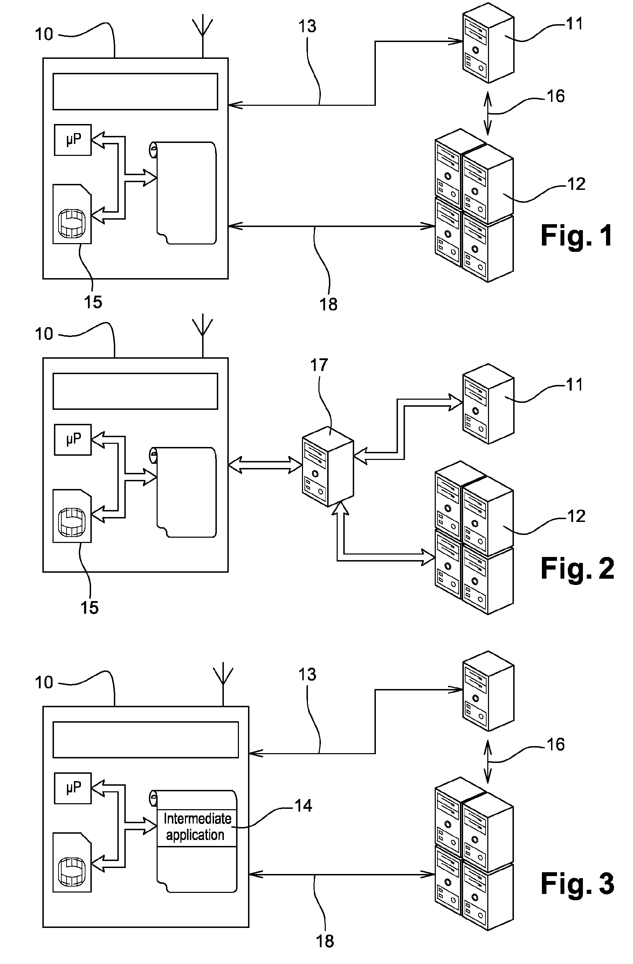

FIG. 1 shows a block diagram representing a system in which a user is authenticated by an authentication server 12 during a transaction processing with a service provider 11. This transaction processing can be any transaction wherein the identity of the user has to be authenticated like payment transaction, purchase transaction, banking transaction, booking transaction and so on. In the embodiments illustrated by the drawings, the transaction processing is a payment transaction.

The service provider 11 can access to the authentication server 12 over an appropriate telecommunication network 16 (for example over Internet). The sessions between the service providers 11 and the authentication server 12 are preferably secured.

The mobile terminal 10 of the user may be a mobile telephone, a personal digital assistant, a computer (e.g. palmtop or laptop) or any other digital device able to perform data communication with the service provider 11.

The mobile terminal 10 is suitably coupled to the service provider 11 via data links 13. A variety of conventional communications media and protocols may be used for data links 13. Such as, for example, a connection to the service provider 11 via Internet is typically used in connection with standard modem communication, cable modem, Dish networks, ISDN, Digital Subscriber Line (DSL), or various wireless communication methods.

In one embodiment variant, the data links 13 is a SMS communication. In another embodiment variant, the data links 13 is an unstructured supplementary service data (USSD) communication. The USSD technology allows the user of the mobile terminal 10 to communicate with the service provider 11 in a way that is transparent to the user and the service provider.

The service provider 11 makes available an offer, for example product, service or information (like a weather report or a list of restaurants in a city). It may be a web e-commerce server, a financial institution, third-party accounts (e.g., PayPal transactions, or the like) and so on.

In a first step well known, the user would like to order a specific product or service of the service provider 11. In a embodiment, the user can have the corresponding offer of the service provider 11 displayed by his mobile user 10 by entering the URL address's service provider in a browser of his mobile. The order session between the service provider 11 and the mobile terminal 10 can be secured or not.

In another embodiment, the mobile terminal 10 can use USSD or SMS to enter the information inquiry corresponding to the offer of the service provider 11.

After that the offer is selected by the user, the service provider initiates a payment transaction process. During this payment transaction, the service provider initiates an authentication process of the user.

The mobile terminal 10 comprises a smart card 15 (like SIM card or a USIM card) which is connected to or inserted into the said mobile terminal 10. Smart card 15 comprises an authentication application which is able to participate to the identification and the authentication of the order's user. The smart card 15 comprises a cryptographic key shared with the authentication server 12.

During this payment transaction process the service provider 11 generates a confirmation message. The service provider 11 transmits to the authentication server 12 an authorization request comprising the confirmation message and identification information of the mobile terminal 10 (like its IMSI) to validate the payment transaction.

Upon reception, the authentication server 12 establishes an authentication session 18 with the mobile terminal 10. The authentication session 18 is effected by using Short Message Service (SMS) technology without requiring extra hardware or special client software to be installed on the mobile terminal because the Short Message Service (SMS) is a service which is implemented in almost all mobile terminals. In an embodiment, the information exchanged between the authentication application and the authentication server 12 through the SMS channels can be protected. In this case, cryptography is utilized to transform this information into an unintelligible form. For that, the authentication application and the authentication server 12 can use several procedures and protocols of algorithms currently used to encrypt and decrypt data.

In an embodiment variant, the service provider 11 comprises the authentication server 12.

FIG. 2 illustrates another embodiment in which a user is authenticated by the authentication server 12 during a transaction with a service provider 11. The embodiment illustrated in FIG.2 comprises a gateway router 17 sets between the mobile terminal 10 and the service provider 11 and the authentication server 12.

The gateway router 17 is a software interface, a computer or a network that allows and controls access between the three entities (service providers 11, authentication server 12 and mobile terminal 10).The communication sessions between the service providers 11 or the authentication server 12 and the gateway router 17 are preferably secured.

According to the embodiment illustrated in FIG.2, during the payment transaction processing initiated by the service provider 11, the gateway router 17 transmits to the authentication server authorization request comprising the confirmation message generated by the service provider 11 to validate the payment transaction.

The mobile terminal 10 communicates with the authentication server 12 via the gateway router 17 to authenticate the user by SMS channels.

FIG. 3 illustrates another embodiment in which the payment transaction process is initiated by an intermediate application 14 after that the offer is selected by the user. This intermediate process 14 is stored, preferably, into the smart card. In an embodiment, the intermediate application is stored into a program memory of the mobile terminal 10.

The intermediate application 14, during this payment transaction, generates the confirmation message and sends it to the service provider 11 which transmits to the authentication server 12 the authorization request comprising this confirmation message to validate the payment transaction.

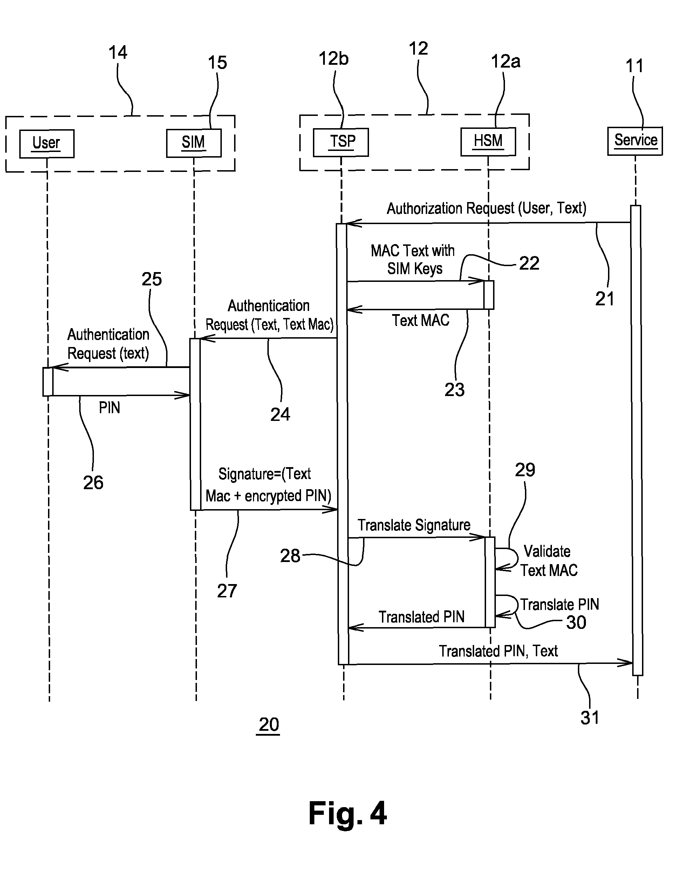

With reference now to FIG. 4, illustrated is an exemplary user authentication processing flow 20. In the example of FIG 4, the gateway router 17 is not illustrated. It should be understood that the presence or not of the gateway does not change the working of the invention.

On a first step, a communication is initiated from mobile terminal 10 to select an offer of the service provider 11, such as by entering a short code like *123# *#123# in a USSD communication. However, it should be understood that the communication can be initiated utilizing different communication technologies above described.

When an offer is selected by the user, the service provider 11 respectively the intermediate application 14 initiates a payment transaction. During this payment transaction, the service provider 11 respectively the intermediate application 14 generates, at step 21, the confirmation message. This confirmation message comprises a content which can be written like:
"You are on the point of validating the service provider's offer amounting xxxx,
   - could you confirm the transaction by entering or pressing the button yes or no."

Next, the service provider 11 transmits to the authentication server 12 the authorization request to validate the payment transaction comprising notably a text and the identity of the mobile terminal 10 of the user. The text is a text file structured as a sequence of lines consisting solely of printable characters from a recognized character set. In a preferred embodiment, the text corresponds to the content of the confirmation message. In a variant embodiment, further of the content of the confirmation message, the text comprises additional content generated randomly by the service provider 11.

Next, a SMS dialog between the mobile terminal 10 and the authentication server 12 is opened when the authentication server 12 received the authorization request.

At step 22, the authentication server 12 computes a hash value from the text according to a well known hash function like SHA, MD5 and so on.

The authentication server 12 comprises a hardware security module 12a (HSM) which handles storage of keys and cryptographic functionality able to compute the hash value. The authentication server 12 can be also protected both by a firewall and by physical security (not represented) to prevent, reduce or deter unauthorized access.

In a preferred embodiment, a MAC algorithm is used by the HSM 12a as Hash Function to computes a MacText. The MAC function, sometimes called a keyed (cryptographic) hash function, received as input the cryptographic key shared with the smart card 15 and the text to be authenticated. The MAC function provides as output, at step 23, the MacText which protects both the text's data integrity as well as its authenticity, by allowing smart card 15 to detect any changes to the text content.

In an embodiment, the text can be encrypted according to well known encryption algorithm by the HSM 12a before to set it as input of the MAC function.

At step 24, the authentication server 12 elaborates an authentication request comprising notably the text, the MacText and a request for entering authentication information. The authentication information corresponds to the identity authenticating token of the user which can be a PIN code, a response to a question, and so on.

Next, the authentication request is sent to the smart card 15 of the mobile terminal 10 by SMS channels thanks to a telephony service provider 12b of the authentication server 12.

When the smart card 15 receives the authentication request, it performs a checking application for the integrity and the authentication of the text. The checking application runs the received text through the same MAC algorithm using the cryptographic key stored into its database to produce a second MacText. The checking application then compares the first MacText received in the transmission to the second generated MacText. If they are identical, the checking application can safely assume that the integrity of the text was not compromised, and the text was not altered or tampered with during transmission. In this case, the smart card 15 performs the authentication application. Otherwise, the authentication process is interrupted and a rejection message is sent to the authentication server 12 in response to the authentication request. This rejection message can contain the reasons of this interruption.

In an embodiment, the authentication application comprises the checking application.

The authentication application transmits, at step 25, the text to the mobile terminal 10 and the request for entering authentication information to submit them to the user. In an embodiment, this text and this request are displayed on the screen of the mobile terminal in a human-readable content. In a variant, this text and this request can be presented to the user as an audible request or through another technique.

At step 26, the user validates the message confirmation and enters authentication information, for example a PIN code. The validation of the message confirmation and the entering of the authentication information can be entered using a keypad of the mobile terminal 10, through voice recognition, or through another means that are in a format understandable by the authentication application of the smart card 15. If the message confirmation is not validated by the user, the authentication process is interrupted and the rejection message is sent to the authentication server in response to the authentication request.

At step 27, the authentication application encrypts the authentication information entered by the user with the key stored into the smart card 15. In one embodiment, the authentication application sends the encrypted authentication information to the authentication server 12 in response to the authentication request through the SMS channels.

In another embodiment, the authentication application sends the encrypted authentication information with the text and the MacText to the authentication server 12 in response to the authentication request to protect the authenticity of the said response.

In another embodiment, as illustrated at FIG.4, to reinforce the protection of the authenticity of the response, the authentication application runs a digital signature scheme (well know in the art) on the encrypted authentication information, the text and the MacText using the key stored in the smart card to producing a signature.

The authentication application forwards to the authentication server 12 the signature through the SMS channels as response to the authentication request. The aim of this signature is to give the authentication server 12 reason to believe that the received message is created and sent by the claimed user.

The telephony service provider 12b of the authentication server 12 transmits the received response (signature) to the HSM 12a. The HSM 12a translates, at step 28, the signature according to standard decryption techniques to obtain the text, MacText and the encrypted authentication information.

At step 29, the HSM 12a performs a checking application for the integrity and the authentication of the text as described above. If the first MacText received is identical to the second generated MacText then the checking application can safely assume that the integrity of the text was not compromised. In this case, the authentication server 12 continues the authentication process. Otherwise, the authentication process is interrupted.

Next, the HSM 12a translates, at step 30, the encrypted authentication information according to standard decryption techniques. The TSP 12b transmits, at step 31, the translated authentication information (and the text or not) to the service provider 11 in response to its authorization request.

The service provider 11 comprises a database containing identifications information about the users already enrolled. These identifications information contains information concerning account information, services authorized to the user, the authentication information such as PIN code etc...

The service provider 11 verifies the authentication information returned by the authentication server 12 during the payment transaction by comparing these data to the identifications information stored into the database. If the information authentication does not fall within the identifications information stored into the database, then the service provider 11 can refuse further service to the user. On the other hand, if the PIN code or the information authentication is determined to be within the database, then the transaction process is ended.

In one embodiment variant, the authentication server 12 may comprise the database containing identifications information about the users. In this case, after step 30, the authentication server 12 checks itself that the information authentication falls within the identifications information stored into its database. The authentication server 12 authorizes the payment transaction and provides to the service provider 11 a confirmation code of the payment transaction. If the payment is not authorized, the authentication server 12 can notify the service provider 11 who can determine whether the payment transaction should be resent of if the transaction should not be allowed to proceed (e.g., the user is not the owner of the account).

With the invention, what the user sees is what he validates because the user is able to check the transaction before to validate it.

## Claims

1. A method to validate a transaction between a mobile terminal of the user and a requesting service provider via an authentication server, said method comprising:
- establishing a SMS channel between the mobile terminal and the authentication server, said mobile terminal comprising a smart card wherein is stored a cryptographic key shared with the authentication server,
- transmitting to the smart card an authentication request from the authentication server, this authentication request comprising a confirmation message of the transaction and a request for entering user authentication information,
- performing an authentication application supported by the smart card to challenge the user for a validation of the message confirmation and an authentication information entered by the user, said authentication information being encrypted by the key,
- transmitting the encrypted authentication information from the mobile terminal through the SMS channel to the authentication server, in response to the authentication request,
- validating the transaction if the authentication information matches identifications information stored in users identifications information database.

2. Method as recited in claim 1, wherein before the transmission of the authentication request to the smart card:
- transmitting an authorization request from the requesting service provider to the authentication server, said authentication request comprising the identity of the mobile terminal and a text file comprising the confirmation message of the transaction,
- computing a MacText of the text according to a hash function,
- elaborating the authentication request comprising the text, the MacText and the request for entering user authentication information.

3. Method as recited in claim 2, wherein the hash function is a MAC algorithm which receives as inputs the key and the text to provide as output the MacText.

4. Method as recited in claims 2 to 3, wherein before user challenging step:
- performing a checking application for the integrity and the authentication of the text, when the authentication request is received, thank to the MacText.

5. Method as recited in claim 4, wherein during user challenging step:
- displaying on the screen of the mobile terminal or in an audible form the text and the request for entering authentication information.

6. Method as recited in claims 1 to 5, wherein the authentication information is a PIN code or a response to a question.

7. Method as recited in claims 2 to 6, wherein the authentication request comprises also the text and the MacText.

8. Method as recited in claims 2 to 6, wherein the authentication request comprises a digital signature of the text, the MacText and the encrypted authentication information according to a digital signature scheme using the key.

9. Method as recited in claim 8, wherein during the validating step:
- performing a checking application for the integrity and the authentication of the text, when the signature is received, thank to the MacText.

10. Method as recited in claim 1 to 9, wherein during the validating step:
- the service provider or the authentication server verifies authentication information by comparing it to the identifications information stored into the database of the service provider or the authentication server,
- If the authentication information does not fall within the identifications information stored into the database, then further service is refused to the user or the transaction is resent.

11. Method as recited in claims 1 to 10 wherein the service provider or an intermediate application of the smart card or the mobile terminal generates the confirmation message when a service provider offer is selected by the user.

12. Method as recited in claim 1 to 11 wherein the mobile terminal is a mobile telephone a personal digital assistant or a computer.
